(19) Europäisches Patentamt
European Patent Office
Office européen des brevets

(11) **EP 2 610 015 A1**

(12) **EUROPEAN PATENT APPLICATION**

(43) Date of publication:
**03.07.2013 Bulletin 2013/27**

(51) Int Cl.:
***B06B 1/02*** (2006.01)     ***H01L 41/04*** (2006.01)
***H01L 21/683*** (2006.01)

(21) Application number: **11010304.1**

(22) Date of filing: **30.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Robert Bosch GmbH**
**70442 Stuttgart (DE)**

(72) Inventor: **Ten Haaf, Eric**
**B3900 Overpelt (NL)**

(74) Representative: **Thürer, Andreas**
**Bosch Rexorth AG**
**Zum Eisengießer 1**
**97816 Lohr am Main (DE)**

(54) **Device and method for producing an analogue control signal**

(57)     A device (1; 2) and method for producing an analogue control signal (3) is provided, for example, for a piezoelectric motor (40) which can be moved in the range of at least nanometers. The device comprises generating means (10) for generating an analogue course signal (12) based on a detection signal (4) of detection means (5) for detecting a feature of an apparatus (40) to be controlled by said analogue control signal (3) and for generating an analogue fine signal (13) based on said detection signal (4), and adding means (20) for adding said course signal (12) and said fine signal (13) generated by said generating means (10) and for outputting a resulting output signal (29) as said control signal (3).

Fig. 1

Printed by Jouve, 75001 PARIS (FR)

EP 2 610 015 A1

**Description**

The present invention relates to a device and a method for producing an analogue control signal which is, for example, an analogue control signal for controlling a motor and, in particular, an electric motor, piezoelectric motor (piezoelectric drive), etc.

Piezoelectric motors can drive an object in a linear or rotary motion by using the converse piezoelectric effect. Herein, the piezoelectric material is electrically activated such that it produces acoustic or ultrasonic vibrations to cause the desired motion. It is also possible that an elongation of the piezoelectric material in a single plane is used to make a series stretches and position holds thereof. In this way, a motion is generated similar to the way a caterpillar moves.

US 3,184,842 discloses a basic principle of a piezoelectric motor.

A simpler type of piezoelectric motor uses a stack elements of piezoelectric material that elongates with an applied voltage. Herein, the voltage to the piezoelectric material is delivered by a piezoelectric drive, which takes an analogue control signal as input.

Control of a piezoelectric motor can be performed, for example, by detecting the position of the piezoelectric material and using the detected position to control the piezoelectric motor. Herein, the control of a high resolution piezoelectric motor demands in some applications a very accurate analogue control signal. Such an application is for example a piezoelectric motor used for driving a stage for holding a semiconductor wafer in a machine for producing an electric circuit element on the semiconductor wafer. In such an application, driving the stage is to be performed in the range of at least nanometers, preferably picometers or less.

That is, the control of such a high resolution piezoelectric motor will be inaccurate when using a low resolution digital/analogue converter. However, high resolution digital/analogue converters suitable for the mentioned purpose are expensive so that the costs of the apparatus performing the control will increase.

Therefore, there is a need for creating a high resolution control signal using cheaper technology.

Due to this, it is an object of the present invention to provide a device and a method for producing an analogue control signal which can fulfill the above mentioned need, particularly, which provide a high resolution control signal usable for the control of an apparatus in the range of at least nanometers by a cheap and simple technology.

This object is solved by a device for producing an analogue control signal according to the features of claim 1. The device comprises generating means for generating an analogue course signal based on a detection signal of detection means for detecting a feature of an apparatus to be controlled by the analogue control signal and for generating an analogue fine signal based on the detection signal, and adding means for adding the course signal and the fine signal generated by the generating means and for outputting a resulting output signal as the control signal.

With the above mentioned device a high resolution control signal can be achieved with the use of standard low resolution means.

This gives more flexibility and enhancements for high demanding problems. It is possible to increase the resolution of the signal by at least 3 bits.

The above mentioned device represents a cheap low resolution digital/analogue converter. The device is in particular advantageous for low frequency control signals.

Further advantageous developments of the device are set out in the dependent claims.

The adding means can comprise an operational amplifier for adding the course signal and the fine signal.

It is possible that the generating means comprises a first analogue output port for outputting said course signal and a second analogue output port for outputting said fine signal to said adding means, said first and second analogue output ports being for outputting each of the course and fine signals with a resolution corresponding to a first predetermined number of bits, wherein the adding means comprises an analogue output port for outputting the control signal with a second predetermined number of bits, and wherein the second predetermined number of bits is at least 3 bits greater than the first predetermined number of bits.

The device can further comprise a first resistor connected between the first analogue output port of the generating means and one of input ports of the adding means, and a second resistor connected between the second analogue output port of the generating means and the input port of the adding means, wherein the result of dividing the resistance value of the first resistor by the resistance value of the second resistor is much smaller than 1.

The device can further comprise a third resistor coupled between an output port of the adding means and the input port of the adding means for inputting the course signal or the fine signal into the adding means, wherein the ratio of the resistance value of the third resistor to the resistance value of the first resistor is approximately equal to the ratio of the output range to the input range.

Preferably, the generating means is a motion control means. Due to that, expensive digital/analogue converters can be avoided.

The device advantageously comprises boosting means for boosting the output signal of the adding means. Therewith, the output signal, and thus the control signal, can be further improved.

The device can be for producing an analogue control signal for a piezoelectric drive.

The above mentioned object is further solved by a method for producing an analogue control signal according to the features of claim 9. The method comprises the steps of: generating, by generating means, an analogue course signal based on a detection signal of detection means for detecting a feature of an apparatus to be controlled by the analogue control signal; generating, by the generating means, an analogue fine signal based on the detection signal; adding, by adding means, the course signal and the fine signal generated by the generating means; and outputting, with the adding means, a resulting output signal as the control signal.

The method is performed by the above-described device so that the method achieves the same advantages as the above-described device.

Further advantageous developments of the method are set out in the dependent claims.

The method can further comprise the step of boosting, by boosting means, the output signal outputted by the adding means and outputting the control signal.

Further possible implementations of the invention also comprise combinations of specific features described above or in the following as regards the embodiments, even if they are not explicitly mentioned. Therefore, the person skilled in the art will also add single aspects as improvements or supplements to the basic form of the invention.

In the following, the present invention is described in more detail with the aid of embodiments by reference to the appended drawings. The figures show:

Fig. 1 a schematic diagram for explaining a device according to a first embodiment;

Fig. 2 a flow chart for explaining a method according to the first embodiment;

Fig. 3 a schematic diagram for explaining a device according to a second embodiment; and

Fig. 4 a flow chart for explaining a method according to the second embodiment.

In the figures, similar elements or elements having similar function are marked with the same reference signs unless specified otherwise.

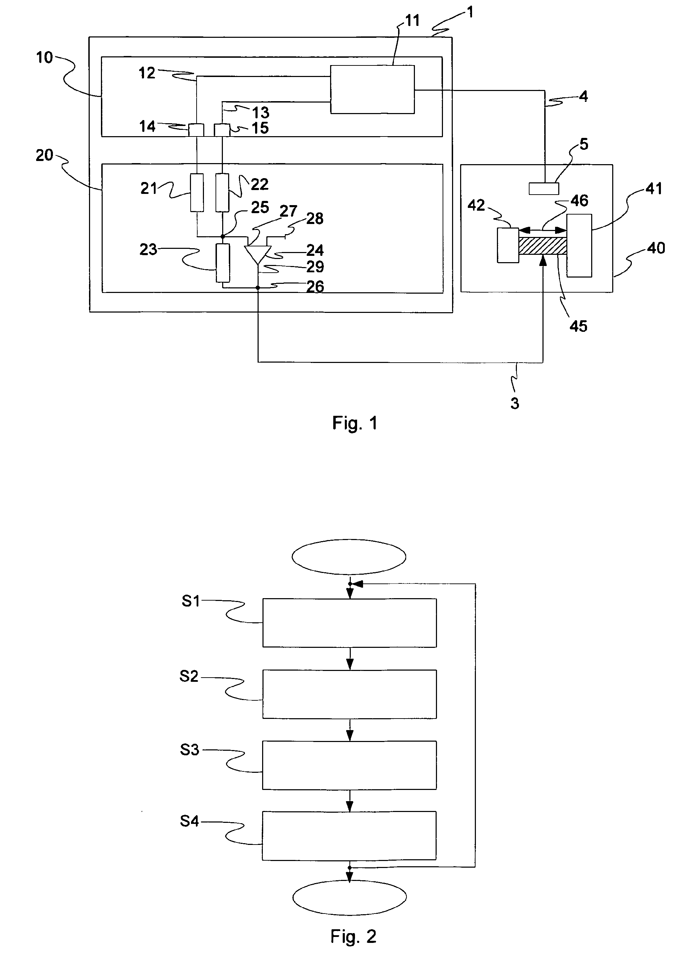

Fig. 1 shows a device 1 for producing an analogue control signal 3. The control signal 3 is generated on the basis of a detection signal 4 of detection means 5. The device 1 includes generating means 10 and adding means 20. The control signal 3 produced by the device 1 is provided for an apparatus 40 capable to drive an article in the range of at least nanometers. The article is represented in Fig. 1 by the first and second elements 41, 42 which are arranged at the both sides of a piezoelectric material 45 of the apparatus 40. The apparatus 40 is in the illustrated case a high resolution piezoelectric motor 40 movable in the direction 46, i.e. in reciprocating motion. In particular, the piezoelectric motor 40 can be used for driving a stage usable for holding a semiconductor wafer. The stage can be part of a machine for producing an electric circuit element on the semiconductor wafer. The detection means 4 can detect the position 46 of the piezoelectric material 45 between the first and second elements 41, 42, for example by an optical detection means, voltage detection means etc.

For example, the apparatus 40 can comprise a piezoelectric stack actuator, capable of elongation only, with a total stroke of approximately 10 micrometers. This is typically used as a high-accurate short-stroke stage, mounted on a less accurate long-stroke stage.

The generating means 10 comprises a converting unit 11 for receiving and converting the detection signal 4. The converting unit 11 converts the detection signal 4 into a course signal 12, and a fine signal 13. The course signal 12 is outputted by a first analogue output port 14 to the adding means 20. The fine signal 13 is outputted by a second analogue output port 15 to the adding means 20. The course signal 12 means in comparison to the fine signal 13 a signal which represents a value with courser resolution than the fine signal 13. In particular, the course signal 12 represents values that are 10 times greater than the values represented by the fine signal 13.

The converting unit 11 may have the functions of control means for calculating an intermediate signal and converting means for converting this intermediate signal to reference output signals, i.e. the course signal 12 and the fine signal 13 for the analogue output ports 14, 15. In the present embodiment, these output ports 14, 15 have equal resolutions and range.

The course signal 12 and the fine signal 13 outputted by the generating means 10 by the first and second analogue output ports 14, 15 to the adding means 20 each have a resolution of 16 bits in the present embodiment.

The adding means 20 has in the present embodiment, besides the function of adding signals, the function of scaling the signals. The function of scaling is helpful, if the two analogue output ports 14, 15 both have the same voltage range (-10V to 10V) and need to be scaled into a course and fine voltage respectively, as described in the present case. The adding means 20 comprises a first resistor 21, a second resistor 22, a third resistor 23 and an operational amplifier 24. One end of the first resistor 21 and one end of the second resistor 22 is connected via a node 25 to one end of the third resistor 23. The third resistor 23 is connected at its other end to a node 26. Herein, the node 25 is connected with an input port 27 of the operational amplifier 24. Further, the operational amplifier 24 is connected at another input port with the ground 28.

The node 26 represents the output of the adding means 20 at which an output signal 29 is outputted which can be used as the control signal 3. For generating the output signal 29 at the node 26, the first analogue output port 14 outputs the course signal 12 to the first resistor 21 through which it flows to the node 25. Further, the second analogue output port 15 outputs the fine signal 13 to the second resistor 22, through which it flows to the node 25. Thus, the signals arriving at the node 25 are inputted in the input 27 of the operational amplifier 24. The operational amplifier 24 acts as an adder which adds the course and fine signals 12 and 13 outputted by the generating means 10 and modified by the first and second resistors 21, 22. The operational amplifier 24 outputs an output signal 29 to the node 26 which acts as an output port. The output signal 29 of the operational amplifier 24 is also fed back via the third resistor 23 to the node 25 and, thus, to the input 27 of the operational amplifier 24.

The adding means 20 provides the output signal 29, the resolution of which corresponds to 19 bits in the present embodiment. However, starting from 2 x 16 bits, it is also possible to produce a signal, the resolution of which corresponds to up to 32 bit, if required. This is achieved by the above described circuitry of the adding means 20 which is further described by the following equations (1) to (4).

$$U_{out} = -\frac{R3}{R1} * AnOut0 - \frac{R2}{R1} * AnOut1 + Offset \qquad ...(1)$$

$$\left( \begin{matrix} \frac{R3}{R1} = 0.5 \\ \frac{R2}{R1} \ll 1 \end{matrix} \right) \Rightarrow U_{out}[0V..10V] \qquad ...(2)$$

$$AnOut0_{course}\ [-10V..10V] \qquad ...(3)$$

$$AnOut1_{fine}[-10V..10V] \qquad ...(4)$$

In the equations (1) to (4), $U_{out}$ represents the voltage at the node 26. R1 represents the resistance value of the first resistor 21. R2 represents the resistance value of the second resistor 22. R3 represents the resistance value of the third resistor 23. $AnOut0_{course}$ represents the voltage at the output of the first analogue output port 14 or the course signal 12. $AnOut1_{fine}$ represents the voltage at the output of the second analogue output port 15 or the fine signal 13. "Offset" in the equation (1) means the offset of the operational amplifier 24.

As shown in the equations (2), in the present embodiment, dividing of the resistance value R3 of the third resistor 23 by the resistance value R1 of the first resistor 21 has the result 0.5. In general, the ratio of the resistance value R3 of the third resistor 23 to the resistance value R1 of the first resistor 21 is approximately equal to the ratio of the output range to the input range of the adding means 20. Further, in the present embodiment, dividing the resistance value R2 of the second resistor 22 by the resistance value R1 of the first resistor 21 has a result which is much smaller than 1. Due to such a relation of the resistance values R1, R2, R3 of the first to third resistors 21, 22, 23, the voltage $U_{out}$ at the node 26 has a value in the range of 0V to 10V. Further, the voltage of the course signal 12 at the output $AnOut0_{course}$ has a value of -10V to 10V. And, the voltage of the fine signal 13 at the output $AnOut1_{fine}$ has a value in the range of -10V to 10V.

The output signal 29 at the output port, i.e. the node 26, of the adding means 20 has thus a higher resolution than the signals 12, 13 provided by the generating means 10. The output signal 29, i.e. the control signal 3 can be used for controlling the position, and due to this the motion, of the apparatus 40, in particular, the piezoelectric material 45 and the elements 41, 42.

Fig. 2 illustrates a method for producing the analogue control signal 2 (Fig. 1). After a start of the method, in a step S1, the analogue course signal 12 is generated in the converting unit 11 of the generating means 10. The analogue course signal 3 is based on a detection signal 4 of the detection means 5. Thereafter, the flow is continued with a step S2.

In the step S2, the analogue fine signal 13 is generated in the converting unit 11 of the generating means 10. The analogue fine signal 13 is based on the detection signal 4 of the detection means 5 which is also used for generating the analogue course signal 12 in the step S1. Thereafter, the flow is continued with a step S3.

In the step S3, the adding means 20 adds the course signal 12 and the fine signal 13, that is, the signals outputted by the first and second analogue output ports 14, 15 and modified by the resistors 21, 22. Herein, the above described circuitry of the adding means 20 is used. Following this, a step S4 is performed.

In the step S4, the output signal 29 is outputted at the node 26 of the adding means 20. The output signal 29 is used as it is as the control signal 3 as described above for controlling the apparatus 40. Thereafter the flow goes back to the step S1.

The method is performed as long as a control of the apparatus 40, in particular the piezoelectric material 45 of the piezoelectric motor, is required.

With the above described device and method a solution is provided which will increase the resolution of an analogue signal for achieving a high resolution analogue control signal 3, even if a lower resolution signal converter, the generating means 10, is used for converting the detection signal 4 into an analogue signal. In case the detection signal 4 is a digital signal, the generating means 10 is a digital/analogue signal converter.

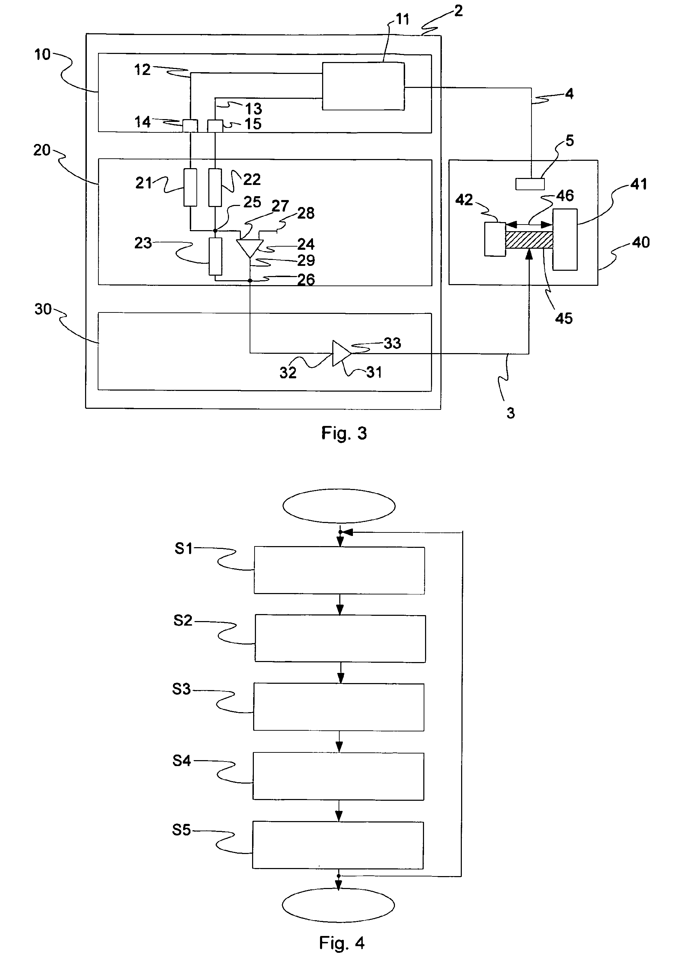

Fig. 3 shows a device 2 according to the second embodiment. The device 2 has in many aspects the same construction and function as the device 1 of the first embodiment. Thus, in the following the description is made only with regard to the aspects which are different between the devices 1, 2 of the embodiments.

In Fig. 3, the device 2 of the present embodiment in addition comprises boosting means 30. The boosting means 30 includes an operational amplifier 31, which is connected at its input port 32, i.e. the input port 32 of the boosting means 30, with the node 26 of the adding means 20. At an output 33 of the operational amplifier 31 the control signal 3 is outputted. The boosting means 30 is for boosting the output signal 29 outputted at the node 26 of the adding means 20. The boosting means 30 can be a drive for the apparatus 40.

Thus, the boosting means 30 can further improve the analogue control signal 3.

Fig. 4 shows the corresponding method performed by the device 2 of the present embodiment. Further to the steps S1 to S4, which are the same as the steps S1 to S4 of the first embodiment, a step S5 is performed. Herein, the output signal 29 is boosted by the use of the boosting means 30. The resulting analogue control signal 3 which is outputted at the output port 33 can again be used for controlling the apparatus 40. Thereafter, the flow goes back to the step S1, as described above with reference to Fig. 2.

All of the previously described implementation forms of the device 1 and the method can be used separately or in all possible combinations thereof. In addition, in particular, the following modifications are conceivable.

Preferably, the detection means 5 is arranged such that it can generate a detection signal having at least the same resolution as the control signal 3.

The apparatus 40 can be any other apparatus than a high resolution piezoelectric motor 40. The detection means 5 can also be a detection means for detecting any other feature than the position or motion of an element.

The control signal 3 can also be provided for an apparatus 40 a feature of which is to be controlled in the range of $10^{-6}$, $10^{-3}$, or higher ranges. However, the devices 1, 2 are especially advantageous in the ranges of $10^{-9}$ and less.

For high frequency input signals, the features of the operational amplifier 24 can be noticed. Therefore, the circuitry of the adding means 20 can be further improved to extend the applicable frequency range.

It is not required that the generating means 10 is a separate means in the device 1. The generating means 10 can be combined with the adding means 20.

The generating means 10 can be a motion control means and/or a host computer etc. having two analogue input/output units 14, 15.

The boosting means 30 can also be provided separately to the device 1.

**Claims**

1. Device (1; 2) for producing an analogue control signal (3), comprising
   generating means (10) for generating an analogue course signal (12) based on a detection signal (4) of detection means (5) for detecting a feature of an apparatus (40) to be controlled by said analogue control signal (3) and for generating an analogue fine signal (13) based on said detection signal (4), and
   adding means (20) for adding said course signal (12) and said fine signal (13) generated by said generating means (10) and for outputting a resulting output signal (29) as said control signal (3).

**2.** Device (1; 2) according to claim 1, wherein said adding means (20) comprises an operational amplifier (31) for adding said course signal (12) and said fine signal (13).

**3.** Device (1; 2) according to claim 1 or 2, wherein said generating means (10) comprises a first analogue output port (14) for outputting said course signal (12) and a second analogue output port (15) for outputting said fine signal (13) to said adding means (20), said first and second analogue output ports (14, 15) being for outputting each of the course and fine signals (12, 13) with a resolution corresponding to a first predetermined number of bits, wherein said adding means (20) comprises an analogue output port (26) for outputting said control signal (3) with a second predetermined number of bits, and wherein said second predetermined number of bits is at least 3 bits greater than said first predetermined number of bits.

**4.** Device (1; 2) according to claim 3, further comprising
a first resistor (21) connected between said first analogue output port (14) of said generating means (10) and one of input ports (27) of said adding means (20), and
a second resistor (22) connected between said second analogue output port (15) of said generating means (10) and said input port (27) of said adding means (20),
wherein the result of dividing the resistance value (R1) of said first resistor (21) by the resistance value (R2) of said second resistor (22) is much smaller than 1.

**5.** Device (1; 2) according to claim 4, further comprising
a third resistor (23) coupled between an output port (26) of said adding means (20) and said input port (27) of said adding means (20) for inputting said course signal (12) or said fine signal (13) into said adding means (20),
wherein the ratio of the resistance value (R3) of said third resistor (23) to the resistance value (R1) of said first resistor (21) is approximately equal to the ratio of the output range to the input range.

**6.** Device (1; 2) according to one of the preceding claims, wherein said generating means (10) is a motion control means.

**7.** Device (2) according to one of the preceding claims, further comprising boosting means (30) for boosting the output signal (29) of said adding means (20).

**8.** Device (1; 2) according to one of the preceding claims, wherein said device (1; 2) is for producing an analogue control signal (3) for a piezoelectric drive (40).

**9.** Method for producing an analogue control signal (3), comprising the steps of
generating (S1), by generating means (10), an analogue course signal (12) based on a detection signal (4) of detection means (5) for detecting a feature of an apparatus (40) to be controlled by said analogue control signal (3),
generating (S2), by said generating means (10), an analogue fine signal (13) based on said detection signal (4),
adding (S3), by adding means (20), said course signal (12) and said fine signal (13) generated by said generating means (10), and
outputting (S4), with said adding means (20), a resulting output signal (29) as said control signal (3).

**10.** Method according to claim 9, further comprising the step of boosting (S5), by boosting means (30), said output signal (29) outputted by said adding means (20) and outputting said control signal (3).

Fig. 1

Fig. 2

Fig. 3

Fig. 4

Europäisches
Patentamt

European
Patent Office

Office européen
des brevets

## EUROPEAN SEARCH REPORT

**Application Number**

EP 11 01 0304

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 281 652 B1 (RYAN ROBERT P [US] ET AL) 28 August 2001 (2001-08-28) * column 1, line 18 - column 2, line 10; figure 1 * * column 6, line 35; figure 2 * ----- | 1-10 | INV. B06B1/02 H01L41/04 H01L21/683 |
| X | US 3 790 947 A (CAMPBELL C ET AL) 5 February 1974 (1974-02-05) * column 2, line 42 - column 4, line 46; figure 1 * ----- | 1,9 | |
| A | JP 2010 118494 A (DISCO ABRASIVE SYSTEMS LTD) 27 May 2010 (2010-05-27) * abstract * ----- | 1,9 | |

| TECHNICAL FIELDS SEARCHED (IPC) |
|---|
| B06B H01L G03F G05D G12B |

The present search report has been drawn up for all claims

| Place of search | Date of completion of the search | Examiner |
|---|---|---|
| Munich | 28 June 2012 | Trique, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                                   
& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 11 01 0304

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2012

| Patent document cited in search report | | Publication date | Patent family member(s) | Publication date |
|---|---|---|---|---|
| US 6281652 | B1 | 28-08-2001 | NONE | |
| US 3790947 | A | 05-02-1974 | NONE | |
| JP 2010118494 | A | 27-05-2010 | NONE | |

EPO FORM P0459

For more details about this annex : see Official Journal of the European Patent Office, No. 12/82

**EP 2 610 015 A1**

**Patent documents cited in the description**

- US 3184842 A